# EUROPÄISCHE PATENTSCHRIFT

(11) **EP 0 760 444 B1**
(45) Veröffentlichungstag und Bekanntmachung des Hinweises auf die Patenterteilung: **22.05.2002**
(21) Anmeldenummer: 96109470.3
(22) Anmeldetag: 13.06.1996
(51) Int. Cl.: F16K 11/00, F16K 17/38

(54) **Sanitärarmatur, insbesondere sanitäres Thermostatventil**
Sanitary armature, particularly thermostatic valve
Armature sanitaire, notamment soupape thermostatique

(30) Priorität: 25.07.1995 DE 19527144
(43) Veröffentlichungstag der Anmeldung: 05.03.1997
(73) Patentinhaber: HANSA METALLWERKE AG, 70567 Stuttgart (DE)
(72) Erfinder: WEINMANN, Werner, 70794 Filderstadt (DE)
(74) Vertreter: Ostertag, Ulrich, Dr.

(56) Entgegenhaltungen:
- DE-A- 2 920 397
- DE-A- 3 041 261
- DE-A- 3 939 975
- DE-C- 3 101 560

## Beschreibung

Die Erfindung betrifft eine Sanitärarmatur, insbesondere ein sanitäres Thermostatventil, nach dem Oberbegriff des Anspruchs 1.

Manche Sanitäraramturen, insbesondere sanitäre Mischarmaturen zum Wand- oder Unterputzeinbau, weisen in den Wasserzulaufwegen integrierte Vorabsperrventile auf. Diese Vorabsperrventile werden dann geschlossen, wenn zu Wartungszwecken Zugang zu den den Wasserstrom steuernden Elementen gewonnen werden soll. Normalerweise sind diese Vorabsperrventile jedoch geöffnet. Zusätzlich befinden sich in den Zulaufräumen für das Wasser im allgemeinen Siebe oder andere Elemente, die dem Schmutzfang und/oder der Reduzierung der Geräuschentwicklung in der jeweiligen Sanitärarmatur dienen. Diese geräuschdämpfenden Elemente sind im allgemeinen wartungsbedürftig, da sie zur Verschmutzung neigen oder anderen Alterungsprozessen ausgesetzt sind. Bei älteren Sanitärarmaturen dieser Art waren die wartungsbedürftigen Elemente zwar in räumlicher Nähe zu den Vorabsperrventilen angebracht; ihre Entfernung zu Wartungszwecken erfolgte jedoch vollständig unabhängig von der Verstellung des Vorabsperrventils. Daher konnte es vorkommen, daß bei Unachtsamkeit der Zugang zu dem wartungsbedürftigen Element geöffnet wurde, solange das Vorabsperrventil noch nicht geschlossen war, was zu einem unerwünschten Wasseraustritt führte.

Diesem Nachteil der älteren Sanitärarmaturen wird bei der Sanitärarmatur der eingangs genannten Art, die in der DE-A-39 39 975 beschrieben ist, dadurch Rechnung getragen, daß man eine Einrichtung vorsieht, welche die Drehbewegung des Schraubteiles in eine axiale Bewegung des Ventiltellers umsetzt. Auf diese Weise ist immer sichergestellt, daß das Vorabsperrventil geschlossen ist, wenn das wartungsbedürftige Element aus dem Batteriegehäuse herausgenommen wird.

Insbesondere sanitäre Mischarmaturen weisen außer den oben bereits angesprochenen Elementen zusätzlich Rückschlagventile in den Zulaufwegen auf, die generell eine Rückströmung von Wasser in die Hausleitungen, bei Mischarmaturen insbesondere auch eine Querströmung zwischen Kalt- und Warmwasser unterbinden sollen. Derartige Rückschlagventile sind in der DE-A-39 39 975 nicht angesprochen. Bei Sanitäraramturen, die in der dort beschriebenen Art gebaut und vertrieben wurden, war das Rückschlagventil in einer gesonderten Gehäuseöffnung vorgesehen, stellte also ein selbständiges und daher auch unabhängig zu montierendes Bauteil dar. Nachteilig ist dabei, daß das Batteriegehäuse für jedes Rückschlagventil eine zusätzliche verschließbare Bohrung aufweisen muß, was sowohl den Platzbedarf innerhalb des Batteriegehäuses als auch die Kosten erhöht.

Aus der DE-A-28 41 206 ist eine Sanitärarmatur mit einer Baueinheit bekannt, in welcher ein Vorabsperrventil, eine Rückschagventil, ein Plattenschalldämpfer und ein Schmutzfangsieb zusammengefaßt sind. Es fehlt jedoch eine Einrichtung, die dafür Sorge tragen würde, daß diese Baueinheit nur bei geschlossenem Vorabsperrventil herausgenommen werden kann.

Aufgabe der vorliegenden Erfindung ist es, eine Sanitärarmatur der eingangs genannten Art derart auszugestalten, daß auch das Rückschlagventil über dieselbe Öffnung eingebracht werden kann, die von dem Schraubteil verschlossen und über welche das Vorabsperrventl bedient wird.

Diese Aufgabe wird durch die im Anspruch 1 angegebenen Merkmale gelöst.

Die Erfindung fußt auf der Erkenntnis, daß der "Stößel", der in der DE-A-39 39 975 nur die Funktion der Kraftübertragung hat, gleichzeitig als Strömungsweg für das Wasser verwendet werden kann, in dem man ihn hohl ausgestaltet. Formt man somit eine Ende des hohlen Stößels mit einem Ventilsitz aus und läßt diesen mit einem Ventilteller zusammenwirken, der normalerweise gegen den Ventilsitz angedrückt wird, so entsteht ein Vorabsperrventil, welches den Wasserstrom zwischen dem Zulaufraum und dem Verbindungsraum des Batteriegehäuses beherrscht. Ein nennenswert größerer Platzbedarf als bei der in der DE-A-39 39 975 beschriebenen Sanitärarmatur entsteht bei dieser Bauweise nicht. Das Rückschlagventil kann gemeinsam mit dem wartungsbedürftigen Element, insbesondere also dem Sieb, an dem Schraubteil herausgenommen werden. Gleichzeitig bleibt der Vorteil erhalten, daß sich das Vorabsperrventil beim Herausdrehen des Schraubteiles zwangsläufig schließt.

Unter "stößelartig" soll nicht notwendig die klassische Funktion des Stößels verstanden werden, wie sie das entsprechende Teil beispielsweise im Ausführungsbeispiel von Figur 1 der oben erwähnten DE-A-39 39 975 besitzt. Mit gemeint sind alle entsprechenden Bauteile der DE-A-39 39 975, soweit sie nur sich von dem Ventilteller durch den Ventilsitz hindurch auf das Schraubteil zu erstrecken und an der Umsetzung der Drehbewegung des Schraubteiles in die Axialbewegung des Absperrventiltellers teilnehmen.

Der Absperrventil-Teller erhält bei der Erfindung eine zusätzliche Funktion: er dient gleichzeitig als Halterung für den Plattenschalldämpfer sowie als dasjenige Teil,
in welchem sich die luftgefüllte, mit dem Plattenschalldämpfer zusammenwirkende Kammer befindet.

Ein bevorzugtes Ausführungsbeispiel der Erfindung zeichnet sich dadurch aus, daß das Rückschlagventil-Gehäuse in seinem dem Rückschlagventil-Sitz gegenüberliegenden Endbereich als hohlzylindrische Schürze ausgebildet ist, die mit ihrer Stirnseite an dem Absperrventil-Teller anliegt. In dieser Ausgestaltung wirkt das Rückschlagventil-Gehäuse als "echter" Stößel, der selbst axial bewegt wird und durch Anliegen an dem Ventilteller seine Axialbewegung auf diesen überträgt.

Um nunmehr das Einströmen des Wassers in den Innenraum des Rückschlagventil-Gehäuses zu ermöglichen, ist bei einer Ausgestaltung der Erfindung vorgesehen, daß die Schürze des Rückschlagventil-Gehäuses mindestens eine radiale Durchströmungsöffnung aufweist, welche von einem Sieb überdeckt ist. Bei diesem Sieb handelt es sich dann bereits um das "wartungsbedürftige" Element; es übt im allgemeinen geräuschdämpfende Funktion, teilweise auch schmutzfangende Funktion aus.

Die Befestigung des Siebes an dem Rückschlagventil-Gehäuse läßt sich besonders leicht dadurch bewerkstelligen, daß das Sieb hohlzylindrisch ausgebildet ist. Es kann dann nämlich auf die Mantelfläche der Schürze aufgeschoben oder in die Schürze eingeschoben werden und hält dort ohne weitere Befestigungsmittel.

Die einfachste Ausgestaltung der "Einrichtung, welche die Axialbewegung des Schraubteiles in eine Axialbewegung des Absperrventil-Tellers umsetzt", ist diejenige, bei welcher das Rückschlagventil-Gehäuse an dem Schraubteil direkt so befestigt ist, daß es zumindest dessen Axialbewegung beim Verschraubem mitvollzieht. In diesem Falle empfiehlt sich beispielsweise, daß das Rückschlagventil-Gehäuse an dem Schraubteil angeschraubt ist.

Das Schraubteil kann als becherförmiges Teil ausgebildet sein und mindestens eine Radialbohrung aufweisen, wobei das Rückschlagventil-Gehäuse derart an dem Schraubteil befestigt ist, daß sich der Rückschlagventil-Sitz und der Rückschlagventil-Teller im Innenraum des Schraubteiles befinden.

Der Absperrventil-Teller kann in einer Gehäusebohrung axial verschiebbar geführt sein. Dieses lose Einsetzen ist insbesondere bei der Ausgestaltung des Absperrventil-Tellers als Käfig möglich, da der Absperrventil-Teller dann eine ausreichende axiale Länge aufweist, welche Verkippungen in der Gehäusebohrung vermeidet.

Zwischen dem Boden der als Sackbohrung ausgebildeten Gehäusebohrung und dem Absperrventil-Teller kann eine Druckfeder angeordnet sein. Diese übernimmt die Funktion, den Absperrventil-Teller gegen das stößelartige Teil anzudrücken, so daß der Absperrventil-Teller einer Rückwärtsbewegung des Rückschlagventil-Gehäuses automatisch folgt.

Ein Ausführungsbeispiel der Erfindung wird nachfolgend anhand der Zeichnung näher erläutert; es zeigen
- Figur 1:: einen (bezogen auf die Einbaulage) horizontalen Teilschnitt durch ein sanitäres Thermostatventil in der Ruhestellung;
- Figur 2:: einen Schnitt durch das Thermostatventil, entsprechend Figur 1, jedoch in der Fließstellung des Themostatventils;
- Figur 3:: einen Schnitt, entsprechend den Figuren 1 und 2, jedoch in der Absperrstellung des Thermostatventils.

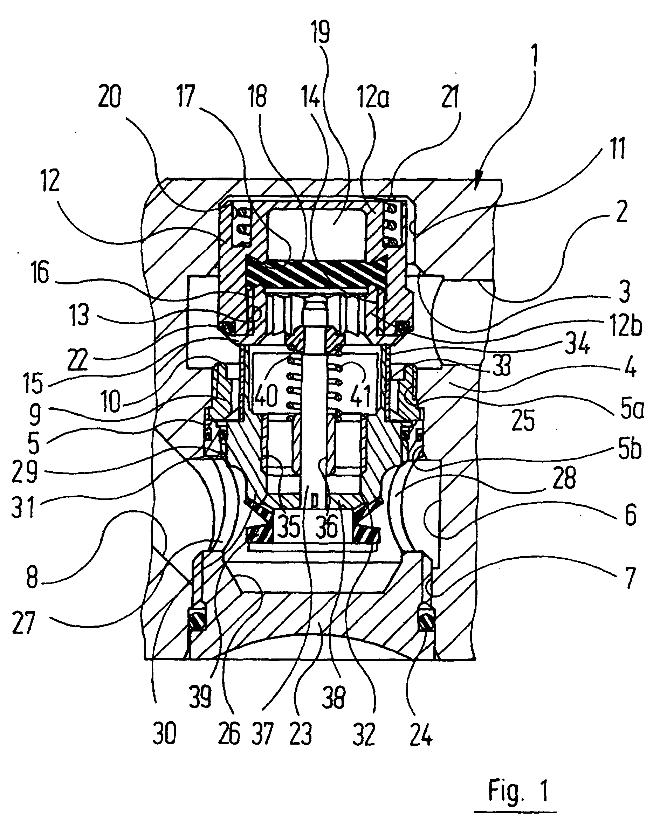

In Figur 1 ist mit dem Bezugszeichen 1 das Batteriegehäuse eines sanitären Thermostatventiles dargestellt. Gezeigt ist im wesentlichen der Bereich des Kaltwasserzulaufes; eine entsprechende Anordnung im Bereich des Warmwasserzulaufes ist symmetrisch, links von dem in Figur 1 dargestellten Bereich, zu denken.

In das Batteriegehäuse 1 ist ein Zulaufkanal 2 eingearbeitet, der rechts zu dem in Figur 1 nicht mehr dargestellten Kaltwasser-Wandanschluß führt und links in einen Zulaufraum 3 des Batteriegehäuses 1 mündet. Der Zulaufraum 3 ist in Figur 1 nach unten, in der Einbaulage des Thermostatventiles also auf den Benutzer zu, durch eine Wand 4 des Batteriegehäuses 1 begrenzt, welche von einer Bohrung 5 durchbrochen ist. Diese umfaßt einen stromaufwärts gelegenen Gewindeabschnitt 5a sowie einen stromabwärts gelegenen gewindelosen Abschnitt 5b und verbindet den Zulaufraum mit einem Verbindungsraum 6 innerhalb des Batteriegehäuses 1. Dieser öffnet sich zum einen über eine Gewindebohrung 7 zur Vorderseite des Batteriegehäuses 1 und führt zum anderen über einen Verbindungskanal 8 zu einem in der Zeichnung nicht mehr dargestellten Aufnahmeraum, in den von der Vorderseite des Batteriegehäuses 1 die in einer Kartusche zusammengefaßten, den Wasserstrom steuernden bzw. regelnden Elemente des Thermostatventiles einsetzbar ist.

In den durch die Wand 4 des Batteriegehäuses 1 geführten Gewindeabschnitt 5a der Bohrung 5 ist ein im wesentlichen ringförmiger Einsatz 9 eingeschraubt. Dieser ist an seiner in Figur 1 oberen, dem Zulaufraum 3 zugewandten Stirnseite als Ventilsitz 10 gestaltet, welcher in noch zu beschreibender Weise der Vorabsperrung des Kaltwasserstromes dient.

In einer die Rückwand des Zulaufraumes 3 koaxial zur Gewindebohrung 5 verlängernden Sackbohrung 11 ist ein Käfig 12 verschiebbar geführt, der einer doppelten Funktion dient: Zum einen stellt er den Ventilteller dar, der mit dem oben bereits angesprochenen Ventilsitz 10 zur Absperrung des Kaltwasserstromes zusammenwirkt; zum anderen dient er der Aufnahme eines Plattenschalldämpfers 18, wie dies nachfolgend noch deutlich wird.

Der Käfig 12 ist aus zwei Teilen 12a und 12b zusammengeschraubt. Das Käfigteil 12a ist grob gesprochen becherförmig und enthält im äußeren Bereich seiner inneren Mantelfläche ein Innengewinde 13.

Das Käfigteil 12b dagegen ist als Ringteil ausgebildet, welches einen axial verlaufenden hohlzylindrischen Bereich 14 und einen sich an diesen hohlzylindrischen Bereich 14 anschließenden, radial nach außen stehenden Flansch 15 aufweist. Die Außenmantelfläche des hohlzylindrischen Bereiches 14 des Käfigteiles 12b trägt ein Außengewinde 16, welches mit dem Innengewinde 13 des Käfigteiles 12a zusammenwirkt.

Zwischen der in Figur 1 nach oben, in der Einbaulage des Thermostatventiles also nach hinten zeigenden Stirnfläche des hohlzylindrischen Bereiches 14 des Käfigteiles 12b und einer Stufe 17 im Innenraum des Käfigteiles 12a ist ein Plattenschalldämpfer 18 aus elastischem Material, beispielsweise Gummi, eingespannt. Die von dem Plattenschalldämpfer 18 und dem Bodenbereich des Innenraumes des Käfigteiles 12a begrenzte Kammer 19 bleibt im Betrieb des Thermostatventiles luftgefüllt, so daß der Plattenschalldämpfer 18 unter dem Einfluß des zuströmenden Wassers bzw. der sich hierin ausbreitenden akustischen Wellen gegen das in der Kammer 19 eingeschlossene Luftpolster anschwingen und so seine geräuschdämpfende Wirkung in an und für sich bekannter Weise entfalten kann.

In eine sich zur in Figur 1 oberen Stirnfläche hin öffnenden Ringnut 20 des Käfigteiles 12a ist eine Druckfeder 21 eingesetzt, die sich am Boden der Sackbohrung 11 des Gehäuses 1 abstützt und den gesamten Käfig 12 in Richtung auf den Ventilsitz 10 zu schieben sucht.

In der in Figur 1 nach unten, in der Einbaulage des Thermostatventiles also auf den Benutzer zu weisenden ringförmigen Stirnfläche des Käfigteiles 12a ist ein O-Ring 22 eingelegt, der teilweise von dem Flansch 15 des Käfigteiles 12b überdeckt und auf diese Weise in seiner Aufnahmenut gehalten wird. Über einen bestimmten Umfangswinkelbereich hinweg liegt der O-Ring 22 jedoch frei; er wirkt hier mit dem Ventilsitz 10 in der Absperrstellung des Thermostatventiles zusammen, wie dies noch weiter unten erläutert wird.

In die Gewindebohrung 7 an der vorderen, in Figur 1 also unteren, Stirnseite des Batteriegehäuses 1 ist ein Schraubteil 23 eingeschraubt. Eine O-Ringdichtung 24, die zwischen den Schraubteil 23 und dem Batteriegehäuse 1 liegt, verhindert ein Auslecken von Wasser an dieser Stelle. Auch das Schraubteil 23 ist becherförmig; es reicht mit seinem innenliegenden Ende bis in den gewindelosen Abschnitt 5b der die Wand 4 des Batteriegehäuses 1 durchsetzenden Bohrung 5 und ist gegen deren Wandung durch einen O-Ring 25 abgedichtet.

Der Innenraum 26 des becherförmigen Schraubteiles 23 steht über Radialbohrungen 27, 28 mit dem Verbindungsraum 6 des Batteriegehäuses 1 in Kommunikation.

Die Wandung des Innenraumes 26 des Schraubteiles 23 ist in dem innenliegenden Bereich mit einem Innengewinde 29 versehen, in welches das Außengewinde 31 eines im wesentlichen hohlzylindrischen Rückschlagventil-Gehäuses 30 eingeschraubt ist. Die zum Benutzer, in Figur 1 also nach unten, zeigende ringförmige Stirnfläche des Rückschlagventil-Gehäuses 30 ist als Rückschlagventil-Sitz 32 ausgestaltet. Außerdem erstreckt sich das Rückschlagventil-Gehäuse mit einer Art Schürze 33 durch den Einsatz 9 hindurch, die sich mit ihrer ringförmigen Stirnfläche an der nach vorne, in Figur 1 nach unten, zeigenden Stirnfläche des Käfigteiles 12b abstützt. Diese Schürze 33 ist außerdem mit radialen Durchgangsfenstern (in der Zeichnung nicht dargestellt) versehen, welche eine Kommunikation zwischen der Außen- und der Innenfläche der Schürze 33 herstellen. Auf die Außenmantelfläche der Schürze 33 ist ein zylindrisches geräuschdämpfendes Sieb 34 aufgeschoben.

Im Innenraum des Rückschlagventil-Gehäuses 30 ist ein sternförmiges Führungsteil 35 befestigt, welches axial durchströmbar ist und eine mittlere Führungsbohrung 36 aufweist. In dieser Führungsbohrung 36 ist ein Ventilschaft 37 linear verschiebbar, der an seinem in Figur 1 unteren, also in der Einbaulage dem Benutzer zugewandten Ende einen mit einer Formdichtung 39 versehenen Rückschlagventil-Teller 38 trägt.

Zwischen der oberen Stirnseite des Führungsteiles 35 und einem in einer Ringnut des Ventilschaftes 37 eingelegten Federteller 40 ist eine Druckfeder 41 eingespannt, welche den Rückschlagventil-Teller 38 mit der Formdichtung 39 in der in Figur 1 dargestellten Ruheposition der Teile gegen den Rückschlagventil-Sitz 32 am Rückschlagventil-Gehäuse 30 drückt.

Die Funktion des beschriebenen Thermostatventiles in dem hier interessierenden Zusammenhang ist wie folgt:

In Figur 1 ist, wie erwähnt, die sogenannte "Ruhestellung" des Thermostatventiles dargestellt. Diese zeichnet sich dadurch aus, daß das Schraubteil 23 verhältnismäßig weit in die Gewindebohrung 7 des Batteriegehäuses 1 hineingedreht ist. Aufgrund der (selbsthemmenden) Gewindeverbindung zwischen dem Schraubteil 23 und dem Rückschlagventil-Gehäuse 30 und aufgrund der Anlage der Schürze 33 des Rückschlagventil-Gehäuses 30 an dem Käfigteil 12b ist der als Absperrventil-Teller dienende Käfig 12 verhältnismäßig weit nach hinten (in Figur 1 also oben) in die Sackbohrung 11 des Batteriegehäuses 1 hineingeschoben.
Die Druckfeder 21 wird dabei komprimiert. Zwischen der O-Ringdichtung 22 und dem Ventilsitz 10 des Einsatzes 9 besteht ein Spalt, der von Wasser durchströmt werden könnte. Ein Wasserfluß findet jedoch in der dargestellten Position der verschiedenen Elemente deshalb nicht statt, weil die mengensteuernden Elemente des Thermostatventiles, die an einer anderen Stelle des Wasserweges vorgesehen sind, geschlossen sind.

Aus diesem Grund ist insbesondere auch der Innenraum des Rückschlagventil-Gehäuses 30 drucklos, so daß die Druckfeder 41 den Rückschlagventil-Teller 38 an den Rückschlag-Ventilsitz 32 des Rückschlagventil-Gehäuses 30 anlegen kann.

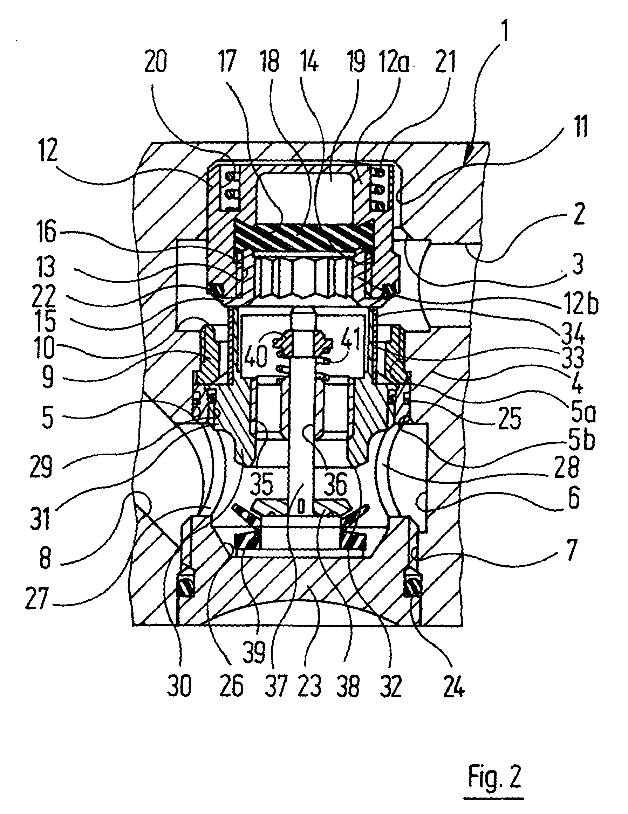

In Figur 2 ist nunmehr die Position der verschiedenen Elemente dargestellt, welche diese einnehmen, wenn nach Öffnen der mengensteuernden Elemente des Thermostatventiles über den Zulaufkanal 2, durch den Spalt zwischen dem als Absperrventil-Teller dienenden Käfig 12 und dem Ventilsitz 10 des Einsatzes 9, durch das Sieb 34 und die Fenster in der Schürze 33 des Rückschlagventil-Gehäuses 30 Wasser in den Innenraum des Rückschlagventil-Gehäuses 30 einströmt: Durch dessen Druck wird nunmehr der Rückschlagventil-Teller 38 mit der Formdichtung 39 vom Rückschlagventil-Sitz 32 des Rückschlagventil-Gehäuses 30 abgehoben, so daß das Wasser weiter in den Innenraum 26 des Schraubteiles 23 und von dort über die Radialbohrungen 27 und 28 in den Verbindungsraum 6 strömen kann. Tritt in dem Zulaufraum 3 ein Unterdruck auf, durch welchen sonst Wasser aus dem Verbindungsraum 6 zurückgesaugt werden könnte, legt sich der Rückschlagventil-Teller 38 sofort in bekannter Weise wieder an den Rückschlagventil-Sitz 32 an und verhindert eine derartige Rückströmung.

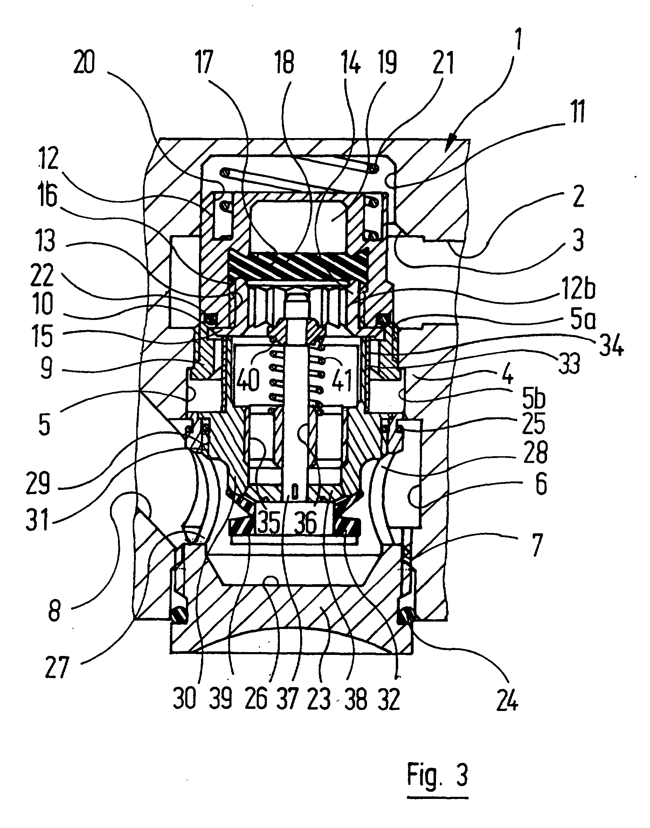

In Figur 3 schließlich ist die sogenannte "Absperrstellung" des Thermostatventiles dargestellt, in welcher das aus den Käfig 12 und dem Einsatz 9 umfassende Vorabsperrventil geschlossen ist, um z. B. die Kartusche des Thermostatventiles austauschen zu können. Die Position von Figur 3 wird, ausgehend von der Position von Figur 1, dadurch erreicht, daß das Schraubteil 23 in der Gewindebohrung 7 nach außen gedreht wird. Gemeinsam mit dem Schraubteil 23 bewegt sich das Rückschlagventil-Gehäuse 30 in den Figuren nach unten, also auf den Benutzer zu. Die zwischen dem Boden der Sackbohrung 11 des Batteriegehäuses 1 und der hinteren Stirnseite des Käfigs 12 verspannte Druckfeder 21 hält den Käfig 12 in Anlage an der inneren Stirnfläche der Schürze 33 des Rückschlagventil-Gehäuses 30 und schiebt daher den Käfig 12 auf den Ventilsitz 10 des Einsatzes 9 zu, bis schließlich der O-Ring 22 am Käfig 12 in Anlage an diesen Ventilsitz 10 gelangt und so einen Wasserdurchfluß aus dem Zulaufraum 3 des Batteriegehäuses 1 in den Innenraum des Einsatzes 9 unterbindet.

Nunmehr sei derjenige Fall in Betracht gezogen, in welchem am Rückschlagventil 30, 38 oder an dem geräuschdämpfenden Sieb 34 Wartungsarbeiten durchgeführt werden müssen. Hierzu wird das Schraubteil 23 über die in Figur 3 dargestellte Position hinaus nach außen verdreht, bis das Schraubteil 23 aus der Gewindebohrung 7 des Batteriegehäuses 1 freikommt und die von dem Schraubteil 23 und dem hiermit verbundenen Rückschlagventil-Gehäuse 30 samt hieran befestigtem Sieb 34 gebildete Einheit aus dem Batteriegehäuse 1 herausgenommen werden kann. Der den Absperrventil-Teller bildende Käfig 12 bleibt dabei in Anlage an dem Ventilsitz 10 des Einsatzes 9, so daß kein Wasser ausströmen kann. Beim Herausschrauben des Schraubteiles 23 zu Wartungsarbeiten am Sieb 34 bzw. dem Rückschlagventil 30, 38 muß also nicht eigens darauf geachtet werden, daß das Absperrventil 10, 12 geschlossen ist; vielmehr stellt sich diese Schließstellung immer von selbst ein.

Sind Wartungsarbeiten an dem Plattenschalldämpfer 18 erforderlich, muß der Einsatz 9 aus dem Gewindeabschnitt 5a der Bohrung 5 in der Gehäusewand 4 herausgedreht werden. Dann kann der Käfig 12 zu den gewünschten Arbeiten aus dem Batteriegehäuse 1 entfernt werden.

## Patentansprüche

1. Sanitärarmatur, insbesondere sanitäres Thermostatventil, mit
a) einem Batteriegehäuse (1);
b) den Wasserstrom steuernden Elementen;
c) mindestens einer über eine einzige Öffnung des Armaturengehäuses eingeführten Baugruppe, welche umfaßt:
ca) ein Schraubteil (23), welches in der Öffnung (7) des Armaturengehäuses (1) verschraubbar ist;
cb) ein Vorabsperrventil (10, 12) mit einem axial beweglichen, "steigenden" Vorabsperrventil-Teller (12), der mit einem Ventilsitz (10) im Batteriegehäuse (1) zusammenwirkt, welcher seinerseits im Wasserweg zwischen einem stromaufwärts liegenden Zulaufraum und einem stromabwärts liegenden Verbindungsraum angeordnet ist;
cc) eine Einrichtung (30), welche die Drehbewegung des Schraubteiles in eine Axialbewegung des Vorabsperrventil-Tellers (12) umsetzt und ein stösselartig wirkendes Teil umfaßt, welches einerseits mit dem Absperrventil-Teller (12) und andererseits mit dem Schraubteil (23) zusammenwirkt und hierzu den Ventilsitz (10) des Vorabsperrventils koaxial durchsetzt;
cd) ein Sieb (34) als wartungsbedürftiges Element, welches zumindest mittelbar von dem Schraubteil (23) getragen ist;
d) einem Plattenschalldämpfer (18);
wobei
e) an einem Rückschlagventil-Gehäuse (30) der Einrichtung ein Rückschlagventil-Teller (38) axial verschiebbar gelagert ist, der durch eine Feder (41) auf einen Rückschlagventilsitz (32) gedrückt ist;
**dadurch gekennzeichnet, daß**
f) das stösselartig wirkende Teil als im wesentlichen hohlzylindrisches Rückschlagventil-Gehäuse (30) ausgebildet ist, welches den Rückschlagventil-Sitz (32) am stromabwärts gelegenen Ende aufweist und über dessen Innenraum der Strömungsweg zwischen dem Zulaufraum (3) und dem Verbindungsraum (6) führt;
g) der Vorabsperrventil-Teller (12) als aus zwei Teilen (12a, 12b) zusammengesetzter Käfig ausgestaltet ist, wobei zwischen den beiden Käfigteilen (12a, 12b) der Plattenschalldämpfer (18) derart eingespannt ist, daß er an einer Seite vom Wasser beaufschlagbar ist und auf der anderen Seite einen mit Luft gefüllten Innenraum (19) des Käfigs (12) begrenzt.

2. Sanitärarmatur nach Anspruch 1, **dadurch gekennzeichnet, daß** das Rückschlagventil-Gehäuse (30) in seinem dem Rückschlagventil-Sitz (32) gegenüberliegenden Endbereich als hohlzylindrische Schürze (33) ausgebildet ist, die mit ihrer Stirnseite an dem Ventilteller (12) des Absperrventils anliegt.

3. Sanitärarmatur nach Anspruch 2, **dadurch gekennzeichnet, daß** die Schürze (33) des Rückschlagventil-Gehäuses (30) mindestens eine radiale Durchströmungsöffnung aufweist, welche von einem Sieb (34) überdeckt ist.

4. Sanitärarmatur nach Anspruch 3, **dadurch gekennzeichnet, daß** das Sieb (34) hohlzylindrisch ausgebildet ist.

5. Sanitärarmatur nach Anspruch 4, **dadurch gekennzeichnet, daß** das Sieb (34) auf die Mantelfläche der Schürze (33) aufgeschoben ist.

6. Sanitärarmatur nach Anspruch 4, **dadurch gekennzeichnet, daß** das Sieb in die Schürze (33) eingeschoben ist.

7. Sanitärarmatur nach einem der vorhergehenden Ansprüche, **dadurch gekennzeichnet, daß** das Rückschlagventil-Gehäuse (30) an dem Schraubteil (23) so befestigt ist, daß es zumindest dessen Axialbewegung beim Verschrauben mit vollzieht.

8. Sanitärarmatur nach Anspruch 7, **dadurch gekennzeichnet, daß** das Rückschlagventil-Gehäuse (30) an dem Schraubteil (23) angeschraubt ist.

9. Sanitärarmatur nach Anspruch 7 oder 8, **dadurch gekennzeichnet, daß** das Schraubteil (23) als becherförmiges Teil ausgebildet ist und mindestens eine Radialbohrung (27, 28) aufweist, und daß das Rückschlagventil-Gehäuse (30) derart an dem Schraubteil (23) befestigt ist, daß sich der Rückschlagventil-Sitz (32) und der Rückschlagventil-Teller (38) im Innenraum des Schraubteils (23) befinden.

10. Sanitäraramtur nach einem der vorhergehenden Ansprüche, **dadurch gekennzeichnet, daß** der Absperrventil-Teller (12) in einer Gehäusebohrung (11) axial verschiebbar geführt ist.

11. Sanitärarmatur nach einem der vorhergehenden Ansprüche, **dadurch gekennzeichnet, daß** zwischen dem Boden der als Sackbohrung ausgebildeten Gehäusebohrung (11) und dem Absperrventil-Teller (12) eine Druckfeder (21) angeordnet ist.

## Claims

1. Sanitary fitting, in particular sanitary thermostatic valve, with
a) a battery housing (1);
b) elements controlling the water flow;
c) at least one subassembly which is introduced through a single opening in the fitting housing and which comprises:
ca) a screwed part (23) which can be screwed down in the opening (7) in the fitting housing (1);
cb) a pre-shutoff valve (10, 12) with an axially mobile, "rising" pre-shutoff valve disc (12) which co-operates with a valve seat (10) in the battery housing (1), which seat is disposed in the water path between a feed space lying upstream and a connecting space lying downstream;
cc) a device (30) which converts the rotational movement of the screwed part into an axial movement of the pre-shutoff valve disc (12) and comprises a part which acts like a ram, co-operates on one side with the shutoff valve disc (12) and on the other with the screwed part (23) and for this purpose passes coaxially through the valve seat (10) of the pre-shutoff valve;
cd) a screen (34) as an element which requires maintenance and which is borne at least indirectly by the screwed part (23);
d) a plate sound damper (18);
wherein
e) a non-return valve disc (38) is mounted so as to be axially displaceable at a non-return valve housing, (30) of the device, which disc is pushed by a spring (41) onto a non-return valve seat (32) ;
f) the part acting like a ram is formed as a substantially hollow cylindrical non-return valve housing (30) which comprises the non-return valve seat (32) at the end located downstream and through the interior space of which the flow path between the feed space (3) and the connecting space (6) leads;
g) the pre-shutoff valve disc (12) is configured as a cage composed of two parts (12a, 12b), wherein the plate sound damper (18) is clamped between the two cage parts (12a, 12b) such that it can be acted upon by water on one side and defines an interior space (19), which is filled with air, of the cage (12) on the other side.

2. Sanitary fitting according to Claim 1, **characterised in that** the non-return valve housing (30) is formed in its end region lying opposite the non-return valve seat (32) as a hollow cylindrical apron (33) which lies by way of its end side against the valve disc (12) of the shutoff valve,

3. Sanitary fitting according to Claim 2, **characterised in that** the apron (33) of the non-return valve housing (30) comprises at least one radial flow opening which is covered by a screen (34).

4. Sanitary fitting according to Claim 3, **characterised in that** the screen (34) is of a hollow cylindrical form.

5. Sanitary fitting according to Claim 4 **characterised in that** the screen (34) is pushed onto the circumferential surface of the apron (33).

6. Sanitary fitting according to Claim 4, **characterised in that** the screen is pushed into the apron (33).

7. Sanitary fitting according to any one of the preceding Claims, **characterised in that** the non-return valve housing (30) is fastened to the screwed part (23) such that it executes at least the axial movement thereof with the latter when this is screwed down.

8. Sanitary fitting according to Claim 7, **characterised in that** the non-return valve housing (30) is screwed to the screwed part (23).

9. Sanitary fitting according to Claim 7 or 8, **characterised in that** the screwed part (23) is formed as a bowl-shaped part and comprises at least one radial bore (27, 28), and that the non-return valve housing (30) is fastened to the screwed part (23) such that the non-return valve seat (32) and the non-return valve disc (38) are located in the interior space of the screwed part (23).

10. Sanitary fitting according to any one of the preceding Claims, **characterised in that** the shutoff valve housing (12) is held in a housing bore (11) so as to be axially displaceable.

11. Sanitary fitting according to any one of the preceding Claims, **characterised in that** a compression spring (21) is disposed between the bottom of the housing bore (11), which is formed as a blind bore, and the shutoff valve disc (12).

## Revendications

1. Armature sanitaire, en particulier soupape thermostatique sanitaire, équipé
a) d'un boîtier de batterie (1) ;
b) d'éléments contrôlant le flux d'eau ;
c) d'au moins un ensemble introduit par une ouverture unique du boîtier d'organe d'armature robinetterie, qui comprend les éléments suivants :
ca) une partie à visser (23), qui peut être vissée dans l'ouverture (7) du boîtier d'armature (1);
cb) une pré-soupape d'arrêt (10, 12) avec une tête de pré-soupe d'arrêt (12) "montante", mobile dans le sens axial, qui agit conjointement avec un siège de soupape (10) dans le boîtier de batterie (1), lequel est disposé pour sa part dans l'écoulement de l'eau entre un espace d'arrivée situé en amont et un espace de liaison situé en aval ;
cc) un dispositif (30) qui convertit le mouvement de rotation de la partie à visser en un mouvement axial de la tête de la pré-soupape d'arrêt (12) et comprend une partie agissant comme un poussoir, qui agit conjointement d'une part avec la tête de la soupape d'arrêt (12) et d'autre part avec la partie à visser (23) et traverse coaxialement à cet effet le siège de soupape (10) de la pré-soupape d'arrêt ;
cd) un tamis (34) comme élément nécessitant de la maintenance, lequel est supporté au moins indirectement par la partie à visser (23) ;
d) un amortisseur de bruit à plaques (18) ;
e) une tête de soupape anti-retour (38) étant logée sur un boîtier de la soupape anti-retour (30) du dispositif de façon à pouvoir coulisser dans le sens axial, laquelle tête est appuyée par un ressort (41) sur un siège de soupape anti-retour (32) ;
**caractérisée en ce que**
f) la partie agissant à la façon d'un poussoir est conçue comme un boîtier de la soupape anti-retour (30) sensiblement en forme de cylindre creux, qui présente le siège de soupape anti-retour (32) sur l'extrémité située en aval et par l'espace intérieur duquel passe le chemin d'écoulement entre l'espace d'arrivée (3) et l'espace de liaison (6) ;
g) la tête de la pré-soupape d'arrêt (12) est conçue comme une cage composée de deux parties (12a, 12b), l'amortisseur de bruit à plaques (18) étant serré entre les deux parties de cage (12a, 12b) de telle façon qu'il peut être sollicité sur un côté par l'eau et délimite de l'autre côté un espace intérieur (19) rempli d'air de la cage (12).

2. Armature sanitaire selon la revendication 1, **caractérisée en ce que** le boîtier de la soupape anti-retour (30) est conçu dans sa zone d'extrémité, opposée au siège de soupape anti-retour (32), comme un tablier (33) en forme de cylindre creux, qui s'appuie avec sa face avant sur la tête de soupape (12) de la soupape d'arrêt.

3. Armature sanitaire selon la revendication 2, **caractérisé en ce que** le tablier (33) du boîtier de soupape anti-retour (30) présente au moins une ouverture d'écoulement radiale qui est recouverte par un tamis (34).

4. Armature sanitaire selon la revendication 3, **caractérisé en ce que** le tamis (34) est conçu comme un cylindre creux.

5. Armature sanitaire selon la revendication 4, **caractérisé en ce que** le tamis (34) est enfilé sur l'enveloppe du tablier (33).

6. Armature sanitaire selon la revendication 4, **caractérisé en ce que** le tamis est introduit dans le tablier (33).

7. Armature sanitaire selon l'une quelconque des revendications précédentes, **caractérisé en ce que** le boîtier de la soupape anti-retour (30) est fixé sur la partie à visser (23) de façon qu'il accomplit au moins son mouvement axial lors du vissage.

8. Armature sanitaire selon la revendication 7, **caractérisé en ce que** le boîtier de la soupape anti-retour (30) est vissé sur la partie à visser (23)

9. Armature sanitaire selon la revendication 7 ou 8, **caractérisé en ce que** la partie à visser (23) est conçue comme une partie en forme de godet et présente au moins un alésage radial (27, 28), et **en ce que** le boîtier de la soupape anti-retour (30) est fixé sur la partie à visser (23) de telle façon que le siège de soupape anti-retour (32) et la téte de soupape anti-retour (38) se trouvent dans l'espace intérieur de la partie à visser (23).

10. Armature sanitaire selon l'une quelconque des revendications précédentes, **caractérisé en ce que** la tête de la soupape anti-retour (12) est guidée dans un alésage de boîtier (11) de façon à pouvoir coulisser dans le sens axial.

11. Armature sanitaire selon l'une quelconque des revendications précédentes, **caractérisé en ce qu'**un ressort de pression (21) est disposé entre le fond de l'alésage de boîtier (11) conçu comme un alésage borgne et la tête de soupape anti-retour (12).
